# EUROPEAN PATENT APPLICATION

(11) **EP 3 772 509 A1**
(43) Date of publication of application: **10.02.2021**
(21) Application number: 19190742.7
(22) Date of filing: 08.08.2019
(51) Int. Cl.: C05G 5/23, C05B 13/00, C05D 1/00

(54) **PK AQUEOUS FERTILISER AND USE THEREOF FOR FERTILIZING A BANANA PLANT**

(71) Applicant: Yara International ASA, 0277 Oslo (NO)
(72) Inventor: AGUILAR, Rolando Ureña, 281-6150 Santa Ana (CR)
(74) Representative: De Clercq & Partners

(57) **Abstract**

The present disclosure relates to the field of compositions that are suitable to be used for fertilizing banana plants by direct injection of the composition into the banana plant pseudostem before harvesting the fruits to increase the weight of the fruits. The composition is an aqueous composition comprising 1 to 3 weight% of P (as P₂O₅), and 10 to 15 weight% of K (as K₂O), and has a pH of about 7. Additionally, 0.05 to 0.1 weight% of boron may be present in the composition, as well as amounts of zinc, magnesium and calcium. The aqueous fertilizer composition according to the invention is advantageously used for fertilizing a banana plant by direct injection of the fertilizer composition into the banana pseudostem, in particular into the outer parts (the xylem vascular system) without damaging the central part of the pseudostem.

## Description

### Field of the invention:

The present disclosure relates to the field of compositions that are suitable to be used for fertilizing banana plants by direct injection of the composition into the banana pseudostem before harvesting the fruits.

### Background:

A banana is an edible fruit produced by several kinds of large herbaceous flowering plants in the genus *Musa.* In some countries, bananas used for cooking may be called "plantains", distinguishing them from dessert bananas. The fruit is variable in size, color, and firmness, but is usually elongated and curved, with soft flesh rich in starch covered with a rind, which may be green, yellow, red, purple, or brown when ripe. The fruits grow in clusters, also called bunches, hanging from the top of the plant. Almost all modern edible seedless bananas come from two wild species - *Musa acuminata* and *Musa balbisiana* and a hybrid - *Musa* x *paradisiaca.* The term "banana" is also used as the common name for the plants that produce the fruit. This can extend to other members of the genus *Musa,* such as the scarlet banana (*Musa coccinea*), the pink banana (*Musa velutina*), and the Fe'i bananas. It can also refer to members of the genus *Ensete,* such as the snow banana (*Ensete glaucum*) and the economically important false banana (*Ensete ventricosum*). Both genera belong to the banana family, *Musaceae.* In this description, when reference is made to a banana plant, it is meant to comprise all species of the banana family, *Musaceae.*

A mature banana plant consists of a pseudostem, which is not a tree, but is formed from tightly packed leaves, which supports the plant. Each pseudostem normally produces a single inflorescence, also known as the "banana heart". The banana fruits develop from the banana heart, in a large hanging cluster, made up of tiers (called "hands"), with up to 20 fruit per tier. The hanging cluster is known as a bunch, comprising 3 to 20 tiers, and can weigh 30 to 50 kilograms. Individual banana fruits (commonly known as a banana or "finger") average 125 grams, of which approximately 75% is water and 25% dry matter. After fruiting, the pseudostem dies, but offshoots (also called suckling) will normally have developed from the base, so that the plant as a whole is perennial.

Banana plant injection, also known as trunk or pseudostem injection, is a method described in the literature for the precise application of a dosage of e.g. pesticides, plant resistance activators, and fertilizers into the xylem vascular tissue of a banana plant with the purpose of protecting the plant from pests or for correction of nutrient deficiencies. This method largely relies on harnessing the plant's vascular system to translocate and distribute the active compounds into the pseudostem, canopy and roots where protection or nutrition is needed. Banana plant injection is currently only practiced for the application of Vydate® nematicide, and its nutritional use has not been documented, in particular for fertilizing banana plants.

It is well known that potassium (K) is a key element in banana plant nutrition. Recommended average rates that are cited in the literature range from 850-1100 Kg/Ha/Year, but in practice such high doses are no longer used as they generate an imbalance of calcium and magnesium in the soil and in the plant. Fertilization in banana should be balanced between potassium, calcium and magnesium. Farms of high production in Latin America must apply per year (according to potassium content in the soil) between 500-600 Kg/Ha/Year of potassium (as K₂O), with 100-150 Kg/Ha/Year of calcium (as CaO) and 80-90 Kg/Ha/Year of magnesium (as MgO). Potassium is very necessary for the filling of the fruit. An insufficient potassium supply reduces the total dry matter production in the plant, and its distribution within the plant. The organ most drastically affected is the bunch. The most universal symptom of K-deficiency is the appearance of orange-yellow chlorosis of the oldest leaves and their subsequent rapid death. Other effects are reduced leaf size, delay in flower initiation, reduced fruit number/bunch and hand number/bunch, and especially - fruit size. Sudden shortages of K can occur if the K release rates of the soil do not match changes in seasonal demand for K by the plant. In these instances the plant may initiate its bunch well, and then, the leaf system will suddenly collapse as K is withdrawn from the leaves to supply the needs of the growing fruit. Cluster formation, number of fingers and finger formation is mainly influenced by zinc, boron and calcium.

Phosphorous requirement is not large (40-90 Kg/Ha/Year), and deficiency symptoms are rarely seen in the field. It is relatively mobile and can be re-utilized in the plant. P may be leached if drip irrigation is employed. Under such conditions frequent P applications may be needed.

Nitrogen requirement is substantial (400-600 Kg/Ha/Year). The classic sources of potassium are potassium chloride, to a lesser degree potassium sulphate, double salt of potassium and magnesium sulfate, and lastly potassium nitrate.

Potassium-containing fertilizer compositions are known in literature, also in combination with phosphorous, such as potassium phosphate and potassium phosphite. In practice, the use of potassium sources combined with phosphorus is not common in banana culture and neither is the use of potassium phosphite, which is rather used as a biostimulant in banana culture.

In general, potassium is applied to the banana plant via the soil or via an irrigation system. Application by injection in the pseudostem is hardly documented.

### Background Prior Art:

Galvis et al. (Agronomía Colombiana 31(1), 103-111, 2013) compared the administration of a fertilizer by insertion in the pseudostem of harvested banana plants (taking into account the interconnection between mother and sucker plant) with a soil application. The potassium-rich fertilizer used in the study was potassium chloride. The study found that fertilizer insertion at a height of 0.9 m was better than insertion at 0.6 m and the soil application. While this document thus mentions injection of a potassium-rich fertilizer in a banana pseudostem, the fertilizer is injected in the mother plant, after harvest of the fruits, so that the sucker (offspring) plants can recover the nutrients in the (dying) mother plant.

The application of fertilizers in freshly harvested plants has been investigated in several countries but it is yet not common practice in any banana country. There is still a need to define the nutrient balance, the dose, the number of applications and to have a statistically proven impact and to partially replace the fertilization of this newly harvested plant with a growing child.

WO00/76941 A1 (Chemgrow, 2000) provides a potassium phosphite fertilizer which can be administered by injection, but is silent on its use in banana. Furthermore, potassium phosphite is not an option to fertilize banana plants.

US 6,372,238 B1 (RAJAMANNAN AMBROSE H. J, 2002) discloses the use of slow release implants into the pseudostem of a banana plant, so that the nutrients are slowly released into the plant over time. The nutrient material for the banana and plantain plants may include conventional nutrient products, 20-20-20 formulation (nitrogen, phosphorus and potassium) or, nitrogen, phosphorus or potassium may be used alone. Implants can be nutrients and/or pesticides in a slow release gel that can be placed inside the pseudostem by an injectable needle with a piston.

WO2011/002985 (Agro-K Corporation, 2011) discloses a method of treating Musa (offspring) plants, including banana plants, wherein a nutrient component is implanted into the pseudostem of the mother plant after harvesting the fruit from the mother plant. The nutrients implanted in the (dying) mother plant are more efficiently available to the daughter plant compared to nutrients applied to the soil. This document particularly discloses the implanting of at least potassium (in particular a potassium chloride fertilizer) into the pseudostem of the mother plant, e.g. by injecting a liquid or gel fertilizer into the pseudostem using a syringe.

It is obvious that fertilizer compositions, which are applied through the soil or irrigation systems, may differ entirely from fertilizer compositions that are injected directly into a plant, and that their development needs to comply with other restrictions, such as avoiding damage to the cell structure of the plant, either chemically or mechanically induced.

All the existing information in the literature is about fertilizing recently harvested plants; there is no fertilization information available for application to plants with fruit.

The inventors have now developed an aqueous potassium-rich fertilizer, in particular for fertilizing banana plants before harvesting the fruits, in particular by direct injection of the aqueous potassium-rich fertilizer into the banana pseudostem.

The aqueous potassium-rich fertilizer, as well as the injection system developed is to specifically fertilize banana plants at about 6 and at about 8 weeks after the emission of fruits on the banana plant, but before harvesting these fruits, with the precise objective of increasing the weight of the fruit.

### Summary of the invention

According to one aspect of the present disclosure is disclosed an aqueous fertilizer composition comprising 1 to 3 weight% of P (as P₂O₅), and 10 to 15 weight% of K (as K₂O), and having a pH of about 7. Further embodiments are disclosed in the depended claims.

According to one aspect of the present disclosure is disclosed a use of the fertilizer composition comprising 1 to 3 weight% of P (as P₂O₅), and 10 to 15 weight% of K (as K₂O), and having a pH of about 7, for fertilizing a banana plant, by direct injection of the fertilizer composition into the banana pseudostem. Further embodiments are disclosed in the depended claims

### Detailed description of the invention

Throughout the description and claims of this specification, the words "comprise" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to " as used when referring to a range for a measurable value, such as a parameter, an amount, a time period, and the like, is intended to include the limits associated to the range that is disclosed.

The term "approximately" and "about" as used when referring to a measurable value, such as a parameter, an amount, a time period, and the like, is intended to represent the measurement error associated with the technique to measure such parameter, amount, time period, and the like, and is considered to be 5% or less, depending on the measurement technique used. It should be understood that the value to which the term "approximately "and "about" refers per se has also been disclosed.

### Composition

According to one aspect of the present disclosure is disclosed an aqueous fertilizer composition comprising 1 to 3 weight% of P (as P₂O₅), and 10 to 15 weight% of K (as K₂O), and having a pH of about 7.

It was found that prior art injection of potassium chloride, potassium nitrate or potassium sulfate, all of them used in soil or irrigation system application, yielded unsatisfactory results when directly injected into banana pseudostem. Without being bound by theory, this was likely attributed to the fact that large amounts of ions such as chloride and sulphate were equally injected with the potassium, which were not nutrients for the banana plant and even acted adversely on the growth thereof.

Furthermore, said prior art injections were applying different potassium solutions to newly harvested plants and there is no application information to plants with fruit under development.

A solution was found by the aqueous fertilizer composition according to the invention. The aqueous fertilizer composition may be produced by dissolving an appropriate amount of one or more of a potassium source and one or more of a phosphate source into water and adjusting the pH to about 7, if necessary.

According to one embodiment, potassium carbonate, potassium pyrophosphate and potassium formate are selected as a source of K and P, dissolved into water, after which the pH is adjusted, if necessary.

According to one embodiment, appropriate amounts of potassium carbonate and potassium pyrophosphate are dissolved in water and the pH is adjusted using a pH adjusting agent.

For example, the composition according to the invention can be produced using YaraVita Agripotash (Yara International ASA) ; this is a highly concentrated liquid potassium product designed for foliar application. It contains 5 weight% of P (expressed as P₂O₅) and 32 % of K as (expressed as K₂O) in the form of potassium carbonate and potassium pyrophosphate.

According to another embodiment, appropriate amounts of potassium formate may be used. A solution of potassium formate has a pH of about 7 and, when used with a neutral phosphate source, the resulting composition according to the invention only needs little or no pH-adjusting.

For example, the composition according to the invention can be produced using YaraVita SAFE-K (Yara International ASA) ; this is a highly concentrated liquid potassium product designed for foliar application. It contains 32 % of K as (expressed as K₂O) in the form of potassium formate and has a pH of about 7.

According to one embodiment, the aqueous fertilizer composition according to the invention comprises about 2 weight% of P (as P₂O₅) and about 13 weight% of K (as K₂O).

According to one embodiment, the aqueous fertilizer composition according to the invention comprises a pH-adjusting agent, such as hydrochloric acid or phosphoric acid to adjust the pH to about 7.

According to one embodiment, the aqueous fertilizer composition according to the invention comprises 0.05 to 0.1 weight% of boron, preferably about 0.07 weight%. The addition of boron is advantageously because boron is an important nutrient in the formation of banana fingers and avoids the presence of short fingers or curved fingers that generate rejection of the fruit for export. Most preferably, boric acid is used as a source of boron.

According to one embodiment, the aqueous fertilizer composition according to the invention comprises amounts of magnesium, zinc and calcium in soluble form.

According to one embodiment, the aqueous fertilizer composition according to the invention is devoid of sulphate. There is no information that justifies the advantage of applying sulphates in that way and with that state of development of the fruit.

According to one embodiment, the aqueous fertilizer composition according to the invention is devoid of chloride. Chloride has a negative electrical charge and prevents the plant from absorbing other cations such as calcium, magnesium, potassium and zinc, which are necessary in the formation and filling of banana fruit.

### Use

The aqueous fertilizer composition according to the invention is advantageously used for fertilizing a banana plant by direct injection of the fertilizer composition into the banana pseudostem. The advantage of this composition is that it does not harm the banana plant and it increases the crop yield in terms of average weight increase of a bunch of bananas for a particular crop field. This increase in crop yield is significant.

The injection can be done by prior art injectors, such as a Banana Backpack Spear Injector (Sidewinder Pty Ltd, Queensland), as long as they do not inflict damage to the banana pseudostem, which would in turn have a negative impact on the generation of fruits and the fruit weight.

Between injections, the needle may be disinfected to prevent cross-contamination of diseases between plants.

According to one embodiment, the fertilizer composition is injected to a single pseudostem as a dose of 10 to 50 ml, preferable 25 ml. This small doses, in particular doses of 10 ml, has the advantage that the yield of the worker in the farms (i.e. the amount of banana trees that can be treated per time unit) will be higher and the damage to the pseudostem of the banana plant will be lower.

According to one embodiment, the composition is injected twice into a single pseudostem, the first time about 6 weeks and the second time about 8 weeks after emission of fruits on the banana plant. This has the advantage that at these two moments of application in the process of filling the fruit, the effect of the injection is greater in terms of weight gain.

According to one embodiment, the composition is injected into the outer parts of the pseudostem without damaging the central part of the pseudostem. The xylem vascular system, which is the tissue responsible for moving water and nutrients from the basal part of the plant to the aerial parts of leaves and fruits, is where the nutrient solution according to the invention is injected and transported to the fruit; It completely envelops the central part of the pseudostem that has the cluster of banana fruits at the end. The xylem vascular system transfers water with nutrients to that central tissue that is fibrous and where the fingers of the banana are hanging in a bunch. That central tissue can not be damaged because the plant dies in the event of any injury.

According to one embodiment, the composition is injected at about one meter above the base of the pseudostem. That height of one meter above the base of the pseudostem (i.e. above the ground) is the most appropriate height for the farm worker to apply the injection.

The invention will now be illustrated by examples. These examples do not limit the scope of the claims.

### Figures

Figures 1a and 1b: Average weight of banana bunches per month for a high potential farm, with each left bar representing a soil fertilization treatment only and each right bar representing a treatment comprising an embodiment of the present invention.
Figures 2a and 2b: Average weight of banana bunches per month for a low potential farm, with each left bar representing a soil fertilization treatment only and each right bar representing a treatment comprising an embodiment of the present invention.

### Experiments

### Example 1

30 weight% of YaraVita Agripotash, 60 weight% of a HCI solution and 10 weight% of water was mixed into a fertilizer composition according to the invention. This mixture was necessary to lower the pH of the YaraVita Agripotash from about 11 to about 7 to avoid damage to the pseudostem.

YaraVita Agripotash is a highly concentrated liquid potassium product designed for foliar application. It contains about 5 weight% of P (expressed as P₂O₅) and about 32 % of K as (expressed as K₂O). It further comprises 1 to 2 weight% of glycine, N,N'-1,2-ethanediylbis[N-(carboxymethyl)-, sodium salt (Na-EDTA) and 0.3 to 1 weight% of boric acid (H₃BO₃), where the ranges and uncertainties are reflecting variations in production.

The composition was applied twice, the first time about 6 weeks and the second time about 8 weeks after emission of fruits on the banana plant, using a custom-made injection gun.

The composition was applied as an additive treatment to the normal fertilization of the banana plant using soil and foliar fertilization, as normally applied to banana plants.

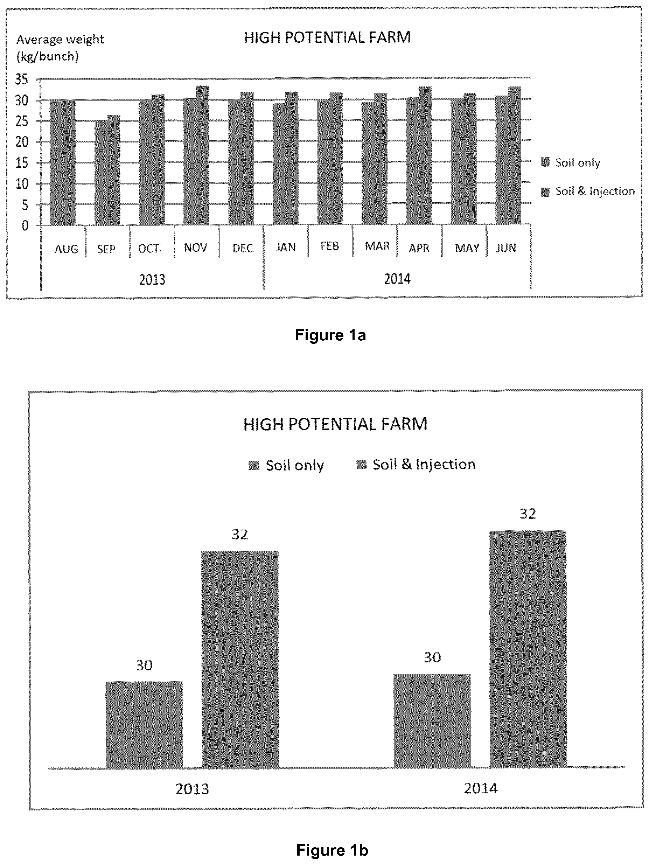

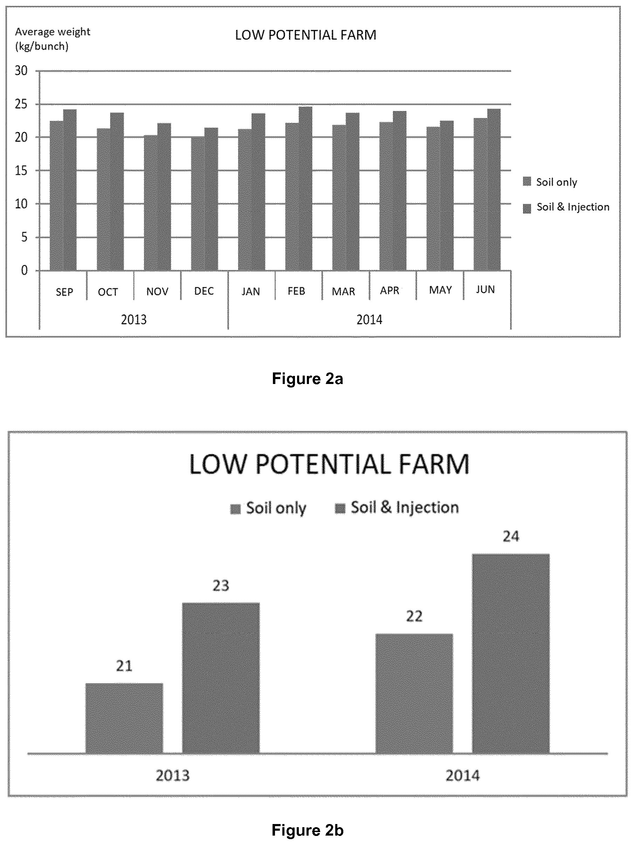

Results of average fruit weight (kg/bunch) are shown in Figures 1a and 1b for a high potential farm and in Figures 2a and 2b for a low potential farm.

A high potential farm is a farm that, taking into account conditions of soils, climate, and administration, has the potential to produce more than 2750 boxes of 18 kilos bananas per hectare per year. A low potential farm produces less than 2750 boxes of 18 kilos bananas per hectare per year. As can be seen in Figure 1b, the difference is about 2 kg per bunch on a value of about 30 kg per bunch, which equals an average weight increase of about 6.5 % for a high potential farm. As can be seen in Figure 2b, the difference is about 2 kg per bunch on a value of about 20 kg per bunch, which equals an average weight increase of about 10 % for a low potential farm. Hence, the treatment is advantageous to both low and high potential farms. The two kilos of weight gain is economically very large and becomes statistically relevant. For example, in a farm with a population of 1700 plants per hectare and with a return of 1.4 (bunches harvested per unit of production per year), with a ratio of 1.35 (exportable boxes of 18 kilos/bunch) the number of boxes increases from 3213 boxes per hectare per year to 3478 boxes per hectare per year and those 265 additional boxes, e.g. for the case of Costa Rica, having a cash value of $ 7.69, are worth $ 2038 per hectare.

## Claims

1. Aqueous fertilizer composition comprising 1 to 3 weight% of P (as P₂O₅), and 10 to 15 weight% of K (as K₂O), and having a pH of about 7.

2. Aqueous fertilizer composition according to claim 1, comprising about 2 weight% of P (as P₂O₅) and about 13 weight% of K (as K₂O).

3. Aqueous fertilizer composition according to any one of claims 1 to 2, further comprising a pH-adjusting agent.

4. Aqueous fertilizer composition according to any one of claims 1 to 3, further comprising 0.05 to 0.1 weight% of boron.

5. Aqueous fertilizer composition according to any one of claims 1 to 4, comprising one or more of potassium carbonate, potassium pyrophosphate and potassium formate as a source of K and P, and boric acid as a source of B.

6. Use of the aqueous fertilizer composition as defined in any one of claims 1 to 5, for fertilizing a banana plant by direct injection of the fertilizer composition into the banana pseudostem.

7. Use of the fertilizer composition as defined in any one of claims 1 to 5, for increasing the weight of the fruit of a banana plant by direct injection of the fertilizer composition into the banana pseudostem.

8. Use according to any one of claim 6 and 7, wherein the fertilizer composition is injected to a single pseudostem as a dose of 10 to 50 ml, preferable 25 ml.

9. Use according to any one of claims 6 to 8, wherein the composition is injected twice into a single pseudostem, the first time at about 6 weeks and the second time at about 8 weeks after emission of fruits on the banana plant.

10. Use according to any one of claims 6 to 9, wherein the composition is injected into the outer parts of the pseudostem without damaging the central part of the pseudostem.

11. Use according to any one of claims 6 to 10, wherein the composition is injected at about one meter above the base of the pseudostem.

12. Use according to any one of claims 6 to 11, wherein the composition is injected into the mother plant before harvesting the fruits.
